# EUROPEAN PATENT SPECIFICATION

(11) **EP 3 163 109 B1**
(45) Date of publication and mention of the grant of the patent: **11.04.2018**
(21) Application number: 15306706.1
(22) Date of filing: 26.10.2015
(51) Int. Cl.: F16D 23/14

(54) **CLUTCH BEARING DEVICE WITH WASHER**
KUPPLUNGSLAGERVORRICHTUNG MIT UNTERLEGSCHEIBE
DISPOSITIF DE PALIER D'EMBRAYAGE AVEC RONDELLE

(43) Date of publication of application: 03.05.2017
(73) Proprietor: Aktiebolaget SKF, 415 50 Göteborg (SE)
(72) Inventor: ARNAULT, Benoit, 37540 SAINT CYR SUR LOIRE (FR); BAUDEZ, Eric, 37230 FONDETTES (FR)
(74) Representative: Kloker, Markus

(56) References cited:
- EP-A1- 2 017 491
- FR-A1- 2 971 825
- US-A- 4 691 815

## Description

The present invention relates to the field of clutch release bearing devices intended to act on the diaphragm of a clutch, in particular for a motor vehicle.

Such a clutch release bearing device generally comprises a rolling bearing comprising a rotating ring and a non-rotating ring, the rotating ring being provided with a bearing surface coming into permanent contact with a clutch member, and in particular with the diaphragm of the clutch. An operating element supports the rolling bearing and can slide axially with respect to a guide tube under the action of a control member (mechanical, electrical or hydraulic).

Generally, the clutch release bearing device further comprises self-centring means interposed between the operating element and the non-rotating ring of the rolling bearing. Said self-centring means provide the axial connexion between these two parts and also allow a radial relative movement between them. For more details, it is possible for example to refer to the patent application FR-A1-2 971 825 (SKF).

In this document, the self-centring means comprise an annular retaining sleeve adapted to be mounted on the operating element, and an elastic washer axially disposed and preloaded between radial tabs of said retaining sleeve and the non-rotating ring of the rolling bearing. The tabs are bended against the washer.

However, the folding height of the successive tabs of the retaining sleeve may vary. Thus, the preload exerted by the washer on the non-rotating ring is not uniform in the circumferential direction.

Otherwise, with the folding step of the tabs, the annular portion of the retaining sleeve from which are issued said tabs is deformed. This leads to a reduction of the radial gap that exists between the retaining sleeve and the non-rotating ring of the rolling bearing. Accordingly, the admissible radial displacement of the rolling bearing relative to the operating element is also reduced.

One aim of the present invention is to overcome these drawbacks.

In one embodiment, the clutch bearing device comprises a bearing provided with an inner ring and with an outer ring, and a retaining sleeve coming into axial contact with one of the rings and provided with a body and with a plurality of bended tabs extending radially outwards and circumferentially spaced apart. The device further comprises a washer axially interposed between said tabs and said ring. At least in a first group of the tabs, each tab comprises a root portion issued from the body and provided with at least one region having reduced thickness relative to the thickness of the rest of said tab.

With such a root portion of the tab having at least locally a reduced thickness, a greater accuracy of the folding position of said tab as well as the folding height can be obtained. Accordingly, at least for the tabs of the first group, the folding zones are disposed in the same radial plane. This leads to a more uniform distribution of the preload exerted by the washer in the circumferential direction.

Besides, with such folding zones, the part of the body from which are issued said tabs is less subject to radial deformations. Otherwise, a sleeve having a plurality of bended spaced tabs is easier to make and to bend than a sleeve having a bended annular flange with reduced thickness. Besides, with such a bended annular flange, the annular junction between said flange and the body of the sleeve may also be subjected to cracking.

Advantageously, the ratio between the reduced thickness region of the root portion of each tab of the first group and the thickness of the rest of said tab is from 40% to 95%, and preferably equal to 70%.

Preferably, the retaining sleeve has constant thickness except for said reduced thickness regions of the root portions of the tabs of the first group.

In one embodiment, the reduced thickness region of the root portion extends on the whole corresponding tab of the first group.

Said root portion of each tab of the first group may comprise a groove delimiting said reduced thickness region. Said groove may be formed on the outer surface of said tab. Alternatively, said groove may be formed on the inner surface of said tab.

Preferably, the reduced thickness region of the root portion of each tab of the first group is located in a radial plane containing the washer.

Preferably, the root portion of each tab of the retaining sleeve comprises at least one region having reduced thickness relative to the thickness of the rest of said tab.

In one embodiment, the tabs of the retaining sleeve are formed at one axial end of said sleeve.

The body of the retaining sleeve may further comprise coupling lugs for coupling said sleeve with an operating element intended to move said device.

In one embodiment, the body of the retaining sleeve comprises a first axial portion, a radial portion in contact with said ring, and a second axial portion from which are issued the tabs in axial contact with the washer. The second axial portion may extend from the radial portion axially on the side opposite to the first axial portion. The first axial portion may comprise the coupling lugs.

Advantageously, the retaining sleeve is made in one part, and preferably made of stamped metal sheet.

Preferably, the body of the retaining sleeve comes into axial contact with a radial portion of said ring, a radial gap being provided between said radial portion and the body.

The present invention and its advantages will be better understood by studying the detailed description of a specific embodiment given by way of a non-limiting example and illustrated by the appended drawings on which:
- Figure 1 is an axial half-section of a clutch release bearing device according to an example of the invention,
- Figure 2 is a side view of a retaining sleeve of the device of Figure 1 before a bending step, and
- Figures 3 and 4 are cross-sections of the retaining sleeve of Figure 2.

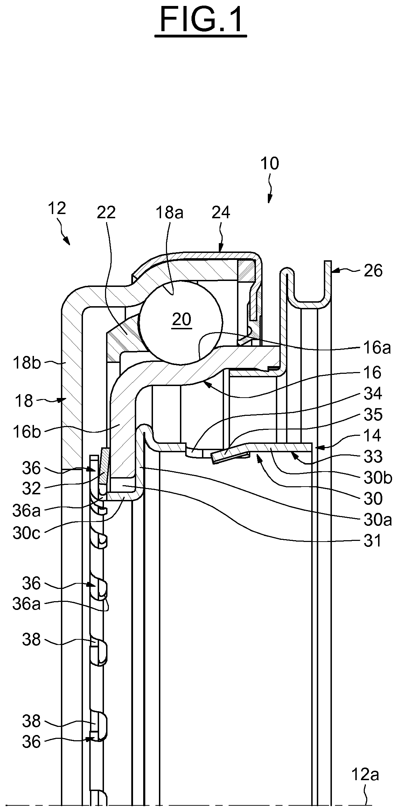

As shown on Figure 1, a clutch release bearing device 10 comprises a rolling bearing 12 and means 14 for axial connection between said bearing and an operating element (not shown) intended to move said device. The operating element may be a separate part from the control member actuating the device 10 or be an integral part of it. In the case of a hydraulically clutch release bearing device, the operating element may consist, for example, of the hydraulic piston.

The rolling bearing 12, of axis 12a, comprises a non-rotating inner ring 16, a rotating outer ring 18, a row of rolling elements 20, which are provided here in the form of balls and are mounted between said rings, and a cage 22 for maintaining the regular circumferential spacing of the rolling elements. The rolling bearing 12 also comprises a seal 24 fixed to the outer ring 18 and cooperating with the inner ring 16. The device 10 further comprises a rear plate 26 secured to the non-rotating ring, here the inner ring 16, to provide an interface between a spring (not shown) and said ring.

The inner and outer rings 16, 18 may advantageously be made of stamped metal sheet. The inner ring 16 delimits a toroidal track or raceway 16a for the rolling elements 20 oriented radially outwards. The inner ring 16 comprises a radial portion 16b extending radially inwards. The outer ring 18 delimits a toroidal track or raceway 18a for the rolling elements 20 oriented radially inwards. The outer ring 18 comprises a radial portion 18b provided to come axially into contact with a diaphragm of the clutch (not shown).

The axial retention means 14 is of the type that permits a certain radial displacement of the non-rotating inner ring 16 relative to the operating element. These means 14 comprise a retaining ring or sleeve 30 and an elastic washer 32 separate from one another. The washer 32 may be for example a Belleville washer. The washer 32 is mounted in axial contact with the radial portion 16b of the inner ring. The washer 32 comprises an outer edge in contact with the radial portion 16b and an inner edge axially offset relative to said radial portion.

The retaining sleeve 30 has an annular form and is made in one part. The sleeve 30 may advantageously be made of stamped metal sheet. The retaining sleeve 30 is mounted into the bore of the rolling bearing 10. The retaining sleeve 30 axially bears against the radial portion 16b of the inner ring axially on the side opposite to the washer 32. A radial gap 31 is provided between the radial portion 16b of the inner ring and the retaining sleeve 30 to enable the radial displacement of the inner ring relative to said retaining sleeve and to the operating element.

The sleeve 30 comprises a main annular body 33 provided with an annular radial portion 30a in axial contact against the radial portion 16b of the inner ring, and with first and second axial portions 30b, 30c both extending from said radial portion 30a. The second axial portion 30c extends from the radial portion 30a axially on the side opposite to the first axial portion 30b. The first axial portion 30b extends a large-diameter edge of the radial portion 30a. The first axial portion 30b has a diameter which is greater than the smallest diameter of the inner ring 16.

A plurality of U-shaped apertures 34 are formed in the first axial portion 30b, for example by cutting, and each delimiting a tab or lug 35 having a certain radial elasticity. In the disclosed example, three lugs 35 are provided. Each lug 35 extends obliquely towards the inside and radially protrudes with respect to the bore of the first axial portion 30b. The lugs 35 are provided to project into a groove formed on the operating element to obtain the axial retention of the sleeve 30 and of said operating element. The first and second axial portions 30b, 30c of the retaining sleeve are provided to permit the mounting of the operating element, said element bearing against the radial portion 30a of said sleeve. The radial portion 30a transmits the axial forces between the operating element and the inner ring 16.

The second axial portion 30c of the retaining sleeve extends a small-diameter edge of the radial portion 30a. The second axial portion 30c has a diameter which is smaller than the smallest diameter of the inner ring 16. The radial gap 31, which allow radial self-alignment of the axis 12a of the rolling bearing relative to the axis of the clutch diaphragm, is provided between the radial portion 16b of the inner ring and the second axial portion 30c of the retaining sleeve.

The retaining sleeve 30 further comprises a plurality of tabs 36 extending radially outwards from the body 33 and pressing against the washer 32. The tabs 36 extend from the second axial portion 30c of said body. The tabs 36 extend from a free edge of the second axial portion 30c. The tabs 36 are regularly spaced apart in the circumferential direction. A space 38 of small dimension is provided between each pair of two successive tabs 36. The tabs 36 are axially located on the side opposite to the lugs 35 with respect to the radial portion 16b of the inner ring.

The tabs 36 press axially against the inner edge of the washer 32. The tabs 36 are bended to come into contact with the washer 32 and to form an axial retention stop for said washer. Any axial movement of the washer 32 in a direction away from the inner ring 16 is prevented. The washer 32 is positioned and axially preloaded between the tabs 36 and the inner ring 16. The washer 32 is in axial contact against the inner ring 16 on one side and in axial contact with the tabs 36 on the other side.

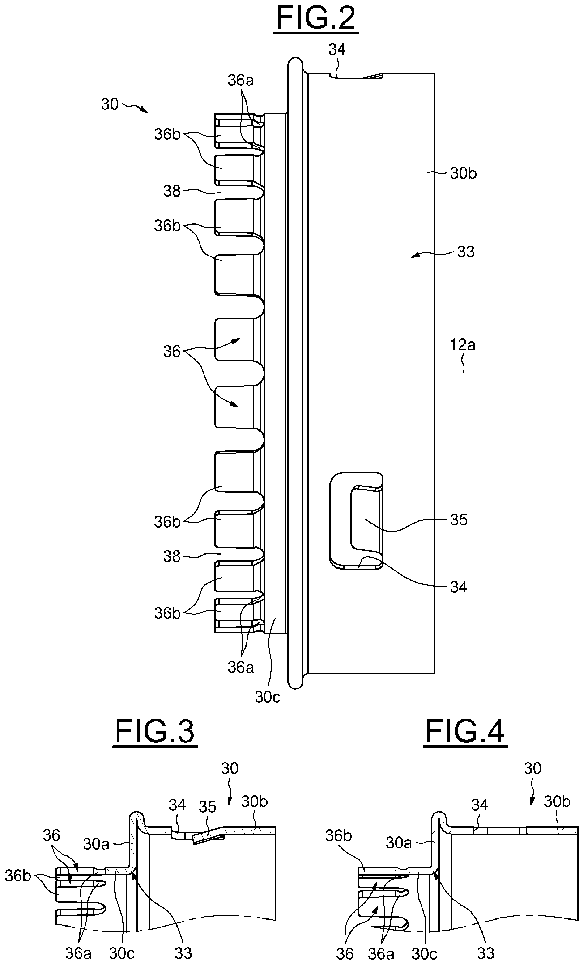

Before the folding step of the tabs 36 of the sleeve, said tabs extends axially from the free edge of the second axial portion 30c as shown on Figure 2. In the illustrated example, the tabs 36 have a rectangular shape. Alternatively, the tabs may have any other different profile, for example a trapezoidal or a square one. Each tab 36 comprises a base or root portion 36a issued from the body 33 of the retaining sleeve, and a free portion 36b extending said root portion. The washer 32 radially surrounds the root portions 36a of the tabs. In other words, the root portion 36a of each tab is located in a radial plane containing the washer 32.

As shown on Figures 2 to 4, the radial thickness of the root portion 36a of each tab is thinner than the radial thickness of the free portion 36b of said tab. The thickness of root portion 36a of each tab is smaller than the thickness of the rest of said tab. Advantageously, the ratio between the thickness of the root portion 36a of each tab and the thickness of the rest of said tab is from 40% to 95%, and preferably equal to 70%. The sleeve 30 has constant thickness except for the root portions 36a of the tabs.

With such tabs 36 comprising a root portion 36a having a reduced thickness, the folding of each of these tabs may be done accurately. The root portion 36a of each tab is thinned to provide a folding zone. Accordingly, after the folding step, with folding zones formed on the tabs 36, a uniform position of the tabs against the washer 32 is obtained. The preload exerted by the washer 32 is uniform in the circumferential direction. Besides, with the folding zones formed on the tabs 36, the deformation of the zone of the body 33 from which are issued said tabs is limited.

In the illustrated example, a groove is formed on the whole outer surface of each tab 36 of the retaining sleeve in order to form the reduced thickness region. For example, the groove may have a circular shape or a different profile in cross-section, for example a square or a rectangular one. Alternatively, the local thinning of each tab could be obtained for example by forming cavity(ies) or recess(es) on said tab. At least one region having reduced thickness could be provided on all the root portions of the tabs of the retaining sleeve as disclosed in the illustrated example or only on some of said tabs. In this last case, the retaining sleeve comprises a first group of tabs provided with root portions each having locally a thinning and a second group of tabs having constant thickness.

The invention has been illustrated on the basis of a clutch bearing device comprising a rolling bearing provided with at least one row of rolling elements radially disposed between the inner and outer rings. Alternatively, the bearing may be a plain bearing or a sliding bearing.

## Claims

1. Clutch bearing device comprising a bearing (10) provided with an inner ring (16) and with an outer ring (18), and a retaining sleeve (30) coming into axial contact with one of the rings and provided with a body (33) and a plurality of bended tabs (36) extending radially outwards and circumferentially spaced apart, the device further comprising a washer (32) axially interposed between said tabs and said ring, **characterized in that**, at least in a first group of the tabs (36) of the retaining sleeve, each tab comprises a root portion (36a) issued from the body (33) and provided with at least one region having reduced thickness relative to the thickness of the rest of said tab.

2. Device according to claim 1, wherein the ratio between the reduced thickness region of the root portion of each tab of the first group and the thickness of the rest of said tab is from 40% to 95%, and preferably equal to 70%.

3. Device according to claim 1 or 2, wherein the retaining sleeve (30) has constant thickness except for the reduced thickness regions of the root portions of the tabs of the first group.

4. Device according to any of the preceding claims, wherein the reduced thickness region of the root portion extends on the whole corresponding tab of the first group.

5. Device according to any of the preceding claims, wherein the root portion (36a) of each tab of the first group comprises a groove delimiting said reduced thickness region.

6. Device according to claim 5, wherein said groove is formed on the outer surface of said tab.

7. Device according to any of the preceding claims, wherein the reduced thickness region of the root portion (36a) of each tab of the first group is located in a radial plane containing the washer (32).

8. Device according to any of the preceding claims, wherein the root portion (36a) of each tab of the retaining sleeve comprises at least one region having reduced thickness relative to the thickness of the rest of said tab.

9. Device according to any of the preceding claims, wherein the tabs (36) of the retaining sleeve are formed at one axial end of said sleeve.

10. Device according to any of the preceding claims, wherein the body of retaining sleeve (30) further comprises coupling lugs (35) for coupling said sleeve with an operating element intended to move said device.

11. Device according to any of the preceding claims, wherein the body of retaining sleeve (30) comprises a first axial portion (30b), a radial portion (30a) in contact with said ring, and a second axial portion (30c) from which are issued the tabs (36) in axial contact with the washer (32).

12. Device according to claim 11, wherein the second axial portion (30c) extends from the radial portion (30a) axially on the side opposite to the first axial portion (30b).

13. Device according to claim 11 or 12 dependent to claim 10, wherein the first axial portion (30b) comprises the coupling lugs (35).

14. Device according to any of the preceding claims, wherein the retaining sleeve is made in one part, and preferably made of stamped metal sheet.

15. Device according to any of the preceding claims, wherein the body of the retaining sleeve (30) comes into axial contact with a radial portion (16b) of said ring, a radial gap (31) being provided between said radial portion and the body.

## Patentansprüche

1. Kupplungslagervorrichtung, die ein Lager (10) umfasst, das mit einem Innenring (16) und mit einem Außenring (18) sowie mit einer Haltehülse (30) versehen ist, die mit einem der Ringe in axialen Kontakt kommt und mit einem Körper (33) und einer Vielzahl von gebogenen Laschen (36) versehen ist, die sich radial nach außen erstrecken und umfänglich voneinander beabstandet sind, wobei die Vorrichtung ferner eine Unterlegscheibe (32) umfasst, die axial zwischen den Laschen und dem Ring eingesetzt ist, **dadurch gekennzeichnet, dass** mindestens in einer ersten Gruppe der Laschen (36) der Haltehülse jede Lasche einen Wurzelabschnitt (36a) umfasst, der vom Körper (33) ausgeht und mit mindestens einem Bereich versehen ist, der relativ zur Dicke des Rests der Lasche eine reduzierte Dicke aufweist.

2. Vorrichtung nach Anspruch 1, wobei das Verhältnis zwischen dem Bereich reduzierter Dicke des Wurzelabschnitts jeder Lasche der ersten Gruppe und der Dicke des Rests der Lasche zwischen 40 % und 95 % beträgt und vorzugsweise gleich 70 % ist.

3. Vorrichtung nach Anspruch 1 oder 2, wobei die Haltehülse (30) abgesehen von den Bereichen reduzierter Dicke der Wurzelabschnitte der Laschen der ersten Gruppe eine konstante Dicke aufweist.

4. Vorrichtung nach einem der vorhergehenden Ansprüche, wobei sich der Bereich reduzierter Dicke des Wurzelabschnitts auf der ganzen entsprechenden Lasche der ersten Gruppe erstreckt.

5. Vorrichtung nach einem der vorhergehenden Ansprüche, wobei der Wurzelabschnitt (36a) jeder Lasche der ersten Gruppe eine Nut umfasst, die den Bereich reduzierter Dicke begrenzt.

6. Vorrichtung nach Anspruch 5, wobei die Nut auf der Außenfläche der Lasche gebildet ist.

7. Vorrichtung nach einem der vorhergehenden Ansprüche, wobei sich der Bereich reduzierter Dicke des Wurzelabschnitts (36a) jeder Lasche der ersten Gruppe in einer radialen Ebene, die eine Unterlegscheibe (32) enthält, befindet.

8. Vorrichtung nach einem der vorhergehenden Ansprüche, wobei der Wurzelabschnitt (36a) jeder Lasche der Haltehülse mindestens einen Bereich umfasst, der relativ zur Dicke des Rests der Lasche eine reduzierte Dicke aufweist.

9. Vorrichtung nach einem der vorhergehenden Ansprüche, wobei die Laschen (36) der Haltehülse an einem axialen Ende der Hülse gebildet sind.

10. Vorrichtung nach einem der vorhergehenden Ansprüche, wobei der Körper der Haltehülse (30) ferner Koppelösen (35) zum Koppeln der Hülse mit einem Betätigungselement, das zum Bewegen der Vorrichtung vorgesehen ist, umfasst.

11. Vorrichtung nach einem der vorhergehenden Ansprüche, wobei der Körper der Haltehülse (30) einen ersten axialen Abschnitt (30b), einen radialen Abschnitt (30a), der mit dem Ring in Kontakt ist, und einen zweiten axialen Abschnitt (30c), von dem die Laschen (36), die mit der Unterlegscheibe (32) in axialem Kontakt sind, ausgehen, umfasst.

12. Vorrichtung nach Anspruch 11, wobei sich der zweite axiale Abschnitt (30c) auf der Seite gegenüber dem ersten axialen Abschnitt (30b) axial vom radialen Abschnitt (30a) erstreckt.

13. Vorrichtung nach Anspruch 11 oder 12 in Abhängigkeit von Anspruch 10, wobei der erste axiale Abschnitt (30b) die Koppelösen (35) umfasst.

14. Vorrichtung nach einem der vorhergehenden Ansprüche, wobei die Haltehülse in einem Stück gefertigt ist und vorzugsweise aus gestanztem Metallblech besteht.

15. Vorrichtung nach einem der vorhergehenden Ansprüche, wobei der Körper der Haltehülse (30) mit einem radialen Abschnitt (16b) des Rings in axialen Kontakt kommt, wobei zwischen dem radialen Abschnitt und dem Körper ein radialer Spalt (31) bereitgestellt ist.

## Revendications

1. Dispositif de palier d'embrayage comprenant un roulement (10), pourvu d'une bague intérieure (16) et d'une bague extérieure (18), et un manchon de retenue (30), venant en contact axial avec l'une des bagues et pourvu d'un corps (33), et une pluralité de languettes (36) courbées s'étendant radialement vers l'extérieur et espacées le long de la circonférence, le dispositif comprenant en outre une rondelle (32) interposée axialement entre lesdites languettes et ladite bague,
**caractérisé en ce que**, au moins dans un premier groupe des languettes (36) du manchon de retenue, chaque languette comprend une partie de fond (36a) issue du corps (33) et pourvue d'au moins une zone d'épaisseur réduite par rapport à l'épaisseur du reste de ladite languette.

2. Dispositif selon la revendication 1, dans lequel le rapport entre la zone d'épaisseur réduite de la partie de fond de chaque languette du premier groupe et l'épaisseur du reste de ladite languette va de 40 % à 95 % et est de préférence égal à 70 %.

3. Dispositif selon la revendication 1 ou 2, dans lequel le manchon de retenue (30) a une épaisseur constante à l'exception des zones d'épaisseur réduite des parties de fond des languettes du premier groupe.

4. Dispositif selon l'une quelconque des revendications précédentes, dans lequel la zone d'épaisseur réduite de la partie de fond s'étend sur la totalité de la languette correspondante du premier groupe.

5. Dispositif selon l'une quelconque des revendications précédentes, dans lequel la partie de fond (36a) de chaque languette du premier groupe comprend une rainure délimitant ladite zone d'épaisseur réduite.

6. Dispositif selon la revendication 5, dans lequel ladite rainure est façonnée sur la surface extérieure de ladite languette.

7. Dispositif selon l'une quelconque des revendications précédentes, dans lequel la zone d'épaisseur réduite de la partie de fond (36a) de chaque languette du premier groupe est située dans un plan radial contenant la rondelle (32).

8. Dispositif selon l'une quelconque des revendications précédentes, dans lequel la partie de fond (36a) de chaque languette du manchon de retenue comprend au moins une zone présentant une épaisseur réduite par rapport à l'épaisseur du reste de ladite languette.

9. Dispositif selon l'une quelconque des revendications précédentes, dans lequel les languettes (36) du manchon de retenue sont constituées à une extrémité axiale dudit manchon.

10. Dispositif selon l'une quelconque des revendications précédentes, dans lequel le corps du manchon de retenue (30) comprend en outre des oreilles d'accouplement (35) pour accoupler ledit manchon avec un élément de manoeuvre servant à déplacer ledit dispositif.

11. Dispositif selon l'une quelconque des revendications précédentes, dans lequel le corps du manchon de retenue (30) comprend une première partie axiale (30b), une partie radiale (30a) en contact avec ladite bague, et une seconde partie axiale (30c) à partir de laquelle sortent les languettes (36) en contact axial avec la rondelle (32).

12. Dispositif selon la revendication 11, dans lequel la seconde partie axiale (30c) s'étend depuis la partie radiale (30a) du côté axialement opposé à la première partie axiale (30b).

13. Dispositif selon la revendication 11 ou 12 subordonnée à la revendication 10, dans lequel la première partie axiale (30b) comprend les oreilles d'accouplement (35).

14. Dispositif selon l'une quelconque des revendications précédentes, dans lequel le manchon de retenue est réalisé en une seule pièce et de préférence fabriqué en tôle emboutie.

15. Dispositif selon l'une quelconque des revendications précédentes, dans lequel le corps du manchon de retenue (30) vient en contact axial avec une partie radiale (16b) de ladite bague, un espace radial (31) étant disposé entre ladite partie radiale et le corps.
